# EUROPEAN PATENT APPLICATION

(11) **EP 3 402 033 A1**
(43) Date of publication of application: **14.11.2018**
(21) Application number: 17465518.3
(22) Date of filing: 10.05.2017
(51) Int. Cl.: H02J 7/00, H02J 50/10, B25F 5/02, B25H 3/02, H02J 7/02

(54) **METHOD FOR CHARGING AN ACCUMULATOR OF A TOOL, TOOL CASE, TOOL CABINET, CHARGING SYSTEM FOR CHARGING AN ACCUMULATOR OF A TOOL AND VEHICLE**

(71) Applicant: Continental Automotive GmbH, 30165 Hannover (DE)
(72) Inventor: Creanga, Calin-Costin, 307288 Rudicia (RO); Zamfiroiu, Alin-Constantin, 300247 Timisoara (RO)

(57) **Abstract**

The invention is concerned with a method for charging an accumulator (14) of a tool (12) which is placed within a tool case (10) . The invention is characterized in that a receiver unit (16) is embedded in the tool case (10). While the tool case (10) is placed in the vicinity of a transmitter unit (24), energy is received by the receiver unit (16) from the transmitter unit (24) . The accumulator (14) of the tool (12) is then charged by means of an electric connector (18) connecting the tool (12) with the receiver unit (16) . The invention is further concerned with a tool case (10) for housing such a tool (12), characterized in that the tool case (10) comprises a receiver cavity in which such a receiver unit (16) is embedded. The invention is further concerned with a tool cabinet (20) for housing at least one tool case (10).

## Description

The invention is concerned with a method for charging an accumulator of a tool. The invention is also concerned with a tool case for housing a tool with an electric accumulator and a tool cabinet with several compartments for housing at least one tool case. The invention is further concerned with a charging system for charging an accumulator of a tool as well as with a vehicle.

In general it is known to power a tool with an accumulator, which can be connected to the tool or embedded into the tool itself. A tool can be for example a drilling machine. Usually the tool is stored or transported in a tool case specially tailored according to the dimensions of the tool, such that the tool can be placed inside the tool box within a tool cavity. The tool cavity holds the tool in a fixed position inside the tool case when the tool case is closed, such that a risk of a potential damage of the tool can be minimized.

It is also known that the amount of energy that an accumulator can store is limited. It is therefore necessary to recharge the accumulator of the power tool regularly or to recharge accordingly to the amount of use of the tool. For this, an electric connector is usually being attached directly to the accumulator or to the tool, such that energy from a power socket can be transferred to the accumulator via the electric connector. As an alternative to the electric connectors, inductive power transfer systems are known.

However, one has to regularly monitor a state of charge of the accumulator of the tool in order to avoid a failure of a functioning of the tool due to an empty accumulator while the tool is in use or being needed. Especially for someone who has to work with several tools, each with their own accumulator, monitoring the state of charge of each accumulator can become complicated and one can lose track of recharging all the accumulators in time. In addition to keeping track of the state of charge of each tool, the charging process comprises many intermediate steps such as removing the tool or the accumulator from the tool case, finding a suitable socket and connecting each accumulator to the socket, waiting for the recharge process to be complete and putting all the accumulators and tools back into the tool case. The charging process therefore becomes very time-consuming. For example, an electrical fitter usually uses for work several tools powered by an accumulator on a regular basis and therefore will have to juggle all the tools charging processes before going to work.

It is therefore an object of the present invention to provide a method for charging an accumulator of a tool that reduces the number of intermediate steps when charging the accumulator. A further object of the present invention is to provide a tool case for housing such a tool and a tool cabinet for housing at least one of such a tool case.

The object is accomplished by the subject matter of the independent claims. Advantageous developments with convenient and non-trivial further embodiments of the invention are specified in the following description, the dependent claims and the figures.

The invention is based on the realization that a lot of time can be saved when charging an accumulator of the tool when the charging of the accumulator takes place while the tool is placed inside a tool case, since the tool is anyway usually stored or transported inside the tool case. As a consequence time and intermediate steps that would usually be required for taking the tool out of the tool case and placing it back into the tool case is saved.

The method for charging an accumulator of a tool according to the invention comprises a first step where the tool is placed inside a tool case. The tool case can be brought into a closed state, where the tool case comprises of an interior space limited by several limiting walls of the tool case. The closed state of the tool case is therefore opposite to an open state of the tool case, where an opening allows the tool to be placed within the tool case. A receiver unit is integrated inside the tool case. The receiver unit can be placed within the tool case. The receiver unit can also extend through at least one of the several limiting walls. The receiver unit can then connect an outside space of the tool case with the interior space of the tool case. The receiver unit can be designed as an electrical component capable of receiving energy.

The method according to the invention comprises a second step wherein energy is received by the receiver unit from a transmitter unit while the tool case is closed and is placed in the vicinity of the transmitter unit. In a third step the accumulator of the tool is charged by means of an electric connector connecting the accumulator of the tool with the receiver unit. In other words, while the receiver unit inside of the tool case is coupled or connected to the transmitter unit, energy is received by the receiver unit and transferred to the accumulator of the tool by means of the electric connector which connects the receiver unit with the accumulator of the tool. Depending on the design of the tool, the electric connector can also connect the receiver unit with the tool itself. The electric connector can be formed as a charging cable known from prior art. The tool can be any tool that comprises an accumulator, for example a screw driller, a grinding tool, a polishing machine, a cutting machine, a measurement device, a saw, an accumulator powered lamp, a hammer drill or a vacuum cleaner. The tool can be also designed as a medical device such as a medical device used in an ambulance. For example the tool is designed as an electrocardiographic device or as a blood pressure meter.

The advantage of the method according to the invention is that the tool or the accumulator no longer needs to be removed from the tool case when charging of the accumulator is needed. The tool can be then charged anywhere where a suitable transmitter unit is available. For example, the transmitter unit can be situated inside of a storage space where the tool case is stored or situated inside of a vehicle by means of which the tool case is being transported to for example a building side. The accumulator of the tool inside the tool case can be then charged while being stored or transported. The transmitter unit can be placed in a location where the tool case is being stored, such that even if one forgets to charge the accumulator, the accumulator is being charged anyway.

The advantage of embedding the receiver unit in the tool case and having the accumulator not being directly connected to the receiver is that an overheating of the accumulator and/or the tool can be avoided. Namely, if the receiver unit would be directly attached to the accumulator and/or the tool, there would be a great risk that the accumulator and/or the tool attached to the receiver unit would overheat quickly because of a lack of intermediary space between the accumulator and the receiver unit and/or between the tool and the receiver unit. Instead, according to the invention, the receiver unit and the accumulator are separated in space inside the tool case and connected only via an electric connector, like for example one or more electric cables. When the accumulator of the tool is fully charged, a stopping mechanism inside the accumulator stops the transfer of energy to the accumulator in a known manner. However, if the receiver unit still receives energy from the transmitter unit when the accumulator is fully charged, there can be a risk of the receiver unit increasing its overall temperature. If in this case the accumulator and/or the tool is still physically in contact with the receiver unit, a transfer of heat to the accumulator and/or to the tool resulting from the increased temperature of the receiver unit cannot be avoided. However, according to the invention the receiver unit and the accumulator and/or the receiver unit and the tool are physically detached from each other and only connected via the electrical connector. The receiver unit and the accumulator can be each embedded in a separate space inside the tool case. Additionally, the receiver unit can be cooled for example with a surrounding air duct. Therefore, a transfer of unnecessary heat from the receiver unit to the accumulator and/or the tool is minimized. As a result, a longevity of the accumulator is increased.

The invention also comprises optional embodiments that provide features which afford additional technical advantages.

According to an advantageous embodiment of the invention the transmitter unit is designed as a first induction coil and the receiver unit is designed as a second induction coil such that the energy is wirelessly transferred from the first induction coil to the second induction coil. In other words, the energy is wirelessly transferred through electromagnetic induction between the first and the second induction coil. The receiver unit and the transmitter unit thus form in a known manner an inductive charging system. The advantage of this embodiment is that the charging of the accumulator of the tool can become even more flexible since no wire is needed to transfer energy from the transmitter unit to the receiver unit. If the transmitter unit is located where the tool case is usually being stored and/or transported, the charging process can start automatically without having a person wiring the receiver unit with the transmitter unit. The accumulator of the tool is then charged automatically while being stored and/or transported. One does not have to remember charging the accumulator. The tool therefore becomes automatically ready for use.

Alternatively, according to another advantageous embodiment the receiver unit is designed as a power plug and the transmitter unit is designed as a matching power socket to the power plug. The energy is then transferred from the transmitter unit to the receiver unit when the power plug is connected with the power socket. For example the power plug is connected with the power socket by means a cable or any electric connector in a known manner. This embodiment is advantageous because traditionally a building or a vehicle comprise many sockets such that plenty of opportunities to connect the receiver unit of the tool case to a power socket are available, which also allows for flexibility when charging of the tool is needed.

The invention also relates to a tool case for housing a tool with an accumulator. The tool case comprises at least one tool cavity designed to house the tool in an interior space of the tool case. The at least one tool cavity is fully enclosed by at least one outer wall of the tool case in a closed state of the tool case. In other words the tool cavity forms a hollow space inside the tool case when the tool case is closed. The tool case can be designed as a box, for example as a box-shaped container. In a known manner the tool cavity can be adapted according to a shape and/or a size of the tool such that in the closed state of the tool case the tool is entirely surrounded by limiting walls of the tool cavity.

The tool case according to the invention comprises a receiver cavity into which a receiver unit is embedded. The receiver cavity is limited by at least one side wall of the receiver cavity inside the tool case in a closed state of the tool case. In other words the receiver cavity forms a hollow space inside the tool case when the tool case is closed. The receiver cavity can be entirely separated from the tool cavity of the tool case by at least one intermediate wall inside the tool case. The receiver unit is designed to receive energy from a transmitter unit outside the tool case in a closed state of the tool case. In addition, the receiver unit is designed to provide the received energy to an electric connector for connecting the receiver unit with a tool inside the tool case. The tool case can comprise in a further embodiment the electric connector.

The advantages described in regard to the method for charging an accumulator of a tool according to the invention and its embodiments also apply correspondingly for the tool case according to the invention.

According to an advantageous embodiment of the tool case the receiver cavity is located within the tool case such that in the closed state of the tool case at least one side wall of the receiver cavity forms at least a portion of the at least one outer wall of the tool case. In other words the receiver cavity is limited by at least one side wall that is designed to also limit at least a portion of the at least one outer wall that limits the tool case itself. The at least one outer wall of the tool case can for example comprise a groove directed towards the interior space of the tool case. The receiver unit is then being housed by the groove. The tool case as well as the receiver cavity can form one integral shape and/or be made out of one integral piece. The at least one side wall of the receiver cavity can then easily form the at least one outer wall of the tool case. The advantage of this embodiment is that the receiver unit is located closest to an exterior space of the tool case. The receiver cavity allows the receiver unit to be held in a fixed position inside the tool case. If the receiver unit is designed as an induction coil the charging process will be facilitated by the fact that the receiver unit can be located as close as possible to a potential transmitter unit outside the tool case. This ensures that the inductive charging process between the receiver unit and the transmitter unit takes place efficiently. The receiver unit can then provide the wireless received energy to a potential placed tool and/or accumulator inside the tool case.

According to another advantageous embodiment the tool case features an outer upper side wall and an outer lower side wall. The outer upper side wall is defined by the outer wall of the tool case onto which a handle is attached. The handle is usually used for transportation purposes of the tool case. The outer lower side wall is then defined by being opposite to the outer upper side wall. In other words the outer lower side wall forms the ground piece of the tool case. For example, the tool case has a cuboid shape, wherein at least two faces are parallel and opposite to each other. One of these two faces forms the outer upper side wall and the other of these two faces forms the outer lower side wall of the tool case. When the tool case is stored it becomes advantageous that the outer lower side wall can be easily identified as the geometry of the tool case only allows one possible outer side wall to be defined as the lower side wall. Therefore, it can be easily identified on which side of the tool case the receiver unit is placed without opening the tool case to check. Thus, placing the tool case in the vicinity of a transmitter unit such that for example the inductive charging process takes place correctly becomes very easy. For this, the receiver cavity can be located along a middle section of the outer lower side wall. In other words a center point of a side of the receiver unit facing the outer lower side wall can coincide with a center point of the outer lower side wall. It is therefore no longer required to consider a symmetry of the tool case when placing the tool case next to the transmitter unit, because the receiver unit is placed correctly with respect to the transmitter unit even if the tool case is flipped around an axis normal to the outer lower side wall. A person storing the tool case does not have to consider how exactly he places the tool case, as long as he correctly identifies the outer lower side wall. The inductive charging process can then take place.

The invention also relates to a tool cabinet with several compartments, wherein each compartment is designed to house one tool case. Each compartment comprises a transmitter unit designed to transfer energy to a receiver unit when supplied with energy. Each transmitter unit can be designed as previously mentioned as a first induction coil, such that energy can be transferred wirelessly to a second induction coil in the vicinity of the first induction coil when the first induction coil is supplied itself with energy. For this, each transmitter unit can be connected to one or more power sockets via one or more electric connectors. The tool cabinet can be designed for a use inside of a vehicle. Each transmitter of the tool cabinet can be then designed to be connected to a vehicle supply system of electricity. The tool cabinet can be used as a way of storing at least one tool case. The tool cabinet according to the invention offers the advantage that the accumulator of at least one tool can be charged while stored with the tool case inside the tool cabinet.

The advantages described in regard to the method for charging an accumulator of a tool and the advantages described in regard to the tool case according to the invention and their respective embodiments also apply correspondingly for the tool cabinet according to the invention.

The invention also relates to a charging system for charging an accumulator of a tool. The charging system comprises at least one tool case according to the invention or according to one of the embodiments of the invention. The charging system further comprises a tool cabinet according to the invention. The advantage of this charging system is that the accumulator of the at least one tool can be charged when the at least one tool case is placed in a compartment of the tool cabinet. The at least one tool does not have to be removed from the tool case in order to be charged. Even if one forgets that the accumulator has to be charged, the latter will be charged automatically anyway when the at least one tool case is stored. Thus, the at least one tool is always available for its next use. This is particularly advantageous when multiple tools have to be charged and ready for the next use, since the tool cabinet can hold multiple tool cases and transmit energy from each transmitter unit to each receiver unit of the respective tool case in order to charge the accumulator inside the respective tool case.

The advantages described in regard to the method for charging an accumulator of a tool, the advantages described in regard to the tool case according to the invention and the advantages described in regard to the tool cabinet according to the invention and their respective embodiments also apply correspondingly for the charging system according to the invention.

According to an advantageous embodiment of the charging system at least one of the several compartments of the tool cabinet is confined by at least one limiting wall whose size corresponds to a size of at least one outer wall of the at least one tool case. For example, the at least one limiting wall has the same size as at least one outer wall of the tool case. When the tool case is placed within a compartment of the tool cabinet the at least one outer wall of the tool case overlaps with the at least one limiting wall of the compartment. The transmitter unit of the corresponding compartment is located on the one of the at least one limiting wall of the compartment which features the size of the outer wall of the tool case, wherein the outer wall is at least partially formed by at least one side wall of the receiver cavity of the tool case. In other words when the tool case is placed in one of the several compartments of the tool cabinet, the transmitter unit of the compartment is located such that it is closest to the receiver unit inside the tool case. For example, the compartment can be designed as a cuboid void space which is at least as large as a cuboid-shaped tool case. The compartment can be limited by several limiting walls such that only one side of the compartment features an opening through which the tool case can be inserted into the compartment. Since the void space of the compartment is such that there is only a limited amount of ways to place the tool case inside the compartment, the charging system can be designed such that when the tool case is placed inside the compartment, the outer wall of the tool case, where the receiver unit is embedded, is in direct contact with the limiting wall of the compartment, where the transmitter unit is located. For example, when the receiver unit is located on the outer lower side wall of the tool case, the transmitter unit can be located on the opposite side of the opening of the compartment. Since one inserts the tool case into the compartment while usually holding the handle of the tool case, the outer lower side wall of the tool case will face the opposite side of the opening of the compartment. Therefore, the receiver unit will most likely be closest to the transmitter unit in this case. If the receiver unit and the transmitter unit are designed as induction coils the inductive charging process can be ensured.

According to another advantageous embodiment of the invention the charging system is configured to determine a current state of charge of the accumulator inside the at least one tool case during the charging process. The tool cabinet and/or the tool case can display the current state of charge. Alternatively or additionally the charging system is configured to transmit the determined current state of charge to a predefined displaying device, such as for example a mobile device. This offers the advantage that a user can be informed anytime about the current state of charge of the accumulator of the at least one tool without needing to take the tool out of its tool case. It is especially advantageous that the user can also be informed about the current state of charge without needing to be near the charging system and the tool case.

For transmitting the current state of charge of the accumulator, the charging system can comprise a communication device like another transmitter for transmitting data comprising the information about the current state of charge to the display and/or the displaying device. The communication can be based on any standard for communication systems, for example radio communication, especially wireless LAN, Bluetooth, mobile communications or IrDA. In order to display the state of charge the tool cabinet or the tool case can comprise optical indicators, for example LEDs. For example a green light may indicate that the accumulator is fully charged, whereas a red light can indicate that the accumulator is not fully charged.

According to another advantageous embodiment of the invention the charging system is configured to initiate the charging of the accumulator automatically in case the transmitter unit is connected to the receiver unit. Especially, in case the receiver unit is connected to the accumulator, the charging system can be configured to initiate the charging automatically as soon as the transmitter unit is connected to a power socket and/or as soon as the transmitter unit and the receiver unit comprise a distance to each other smaller than a predefined threshold. The charging procedure can also be stopped automatically, for example as soon as the accumulator is fully charged.

The invention also relates to a vehicle with an onboard supply system for supplying at least one vehicle component with electricity and a tool cabinet according to the invention. Each transmitter of the tool cabinet is connected to the onboard supply system, such that energy and/or electricity is provided to the transmitter. When transporting the tools in their tool cases with the vehicle, each tool case can be stored in a compartment of the tool cabinet. Charging of the accumulators of the tools becomes very comfortable. For example, while an engine of the vehicle is running, power is supplied to at least one transmitter unit of the tool cabinet through the onboard supply system that connects an electric generator of the car with the at least one transmitter unit. Therefore, meanwhile the engine is running, energy can be transmitted from the at least one transmitter unit to a receiver unit coupled with the at least one transmitter unit and located within the tool case. The receiver unit can then transfer the received energy to the accumulator of the tool inside the tool case. Additionally or alternatively, the vehicle can be parked and connected to an external power grid. The charging process of the tools inside the tool cases placed in the compartments of the tool cabinet can then take place in a similar manner. This facilitates enormously for example the work of a person that needs many accumulator-based tools on a regular basis for work. Since such a person would transport the tools in tool case inside the vehicle anyway, he would no longer need to remove the tool cases from the vehicle to charge the accumulators of the tools. In this way plenty of time and energy can be saved.

The advantages described in regard to the method for charging an accumulator of a tool, the advantages described in regard to the tool case according to the invention, the advantages described in regard to the tool cabinet according to the invention, the advantages described in regard to the charging system according to the invention and their respective embodiments also apply correspondingly for the vehicle according to the invention.

In the following an exemplary implementation of the invention is described. The figures show:
- Fig. 1: a schematic illustration of a tool case according to an embodiment of the invention with a tool; and
- Fig. 2: a schematic illustration of a front view of a tool cabinet according to an embodiment of the invention;
- Fig. 3: a schematic illustration of a side view of a tool cabinet according to an embodiment of the invention;
- Fig. 4: a schematic illustration of a rear side of a vehicle with a tool cabinet according to an embodiment of the invention;
- Fig. 5: a schematic illustration of a rear side of a vehicle with a tool cabinet according to a further embodiment of the invention; and
- Fig. 6: a schematic illustration of a rear side of a vehicle with a tool cabinet according to a further embodiment of the invention.

The embodiments explained in the following are a preferred embodiments of the invention. However, in the embodiments, the described components of the embodiments each represent individual features of the invention which are to be considered independently of each other and which each develop the invention also independently of each other and thereby are also to be regarded as a component of the invention in individual manner or in another than the shown combination. Furthermore, the described embodiments can also be supplemented by further features of the invention already described.

In the figures elements that provide the same function are marked with identical reference signs.

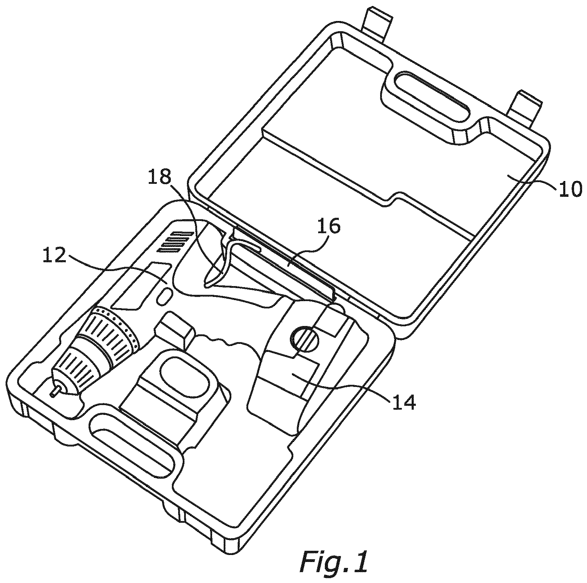

Fig. 1 shows a schematic illustration of a tool case 10 for housing a tool 12 with an accumulator 14. The tool 12 is shown as designed as a screw driller powered by an inbuilt accumulator 14 as it is known from prior art. In known manner, the tool case 10 is formed by two equally sized case halves connected with each other along respectively one connecting side wall of each case half in an open state of the tool case 10. The tool case 10 can be brought in a closed state where the tool case halves overlap each other in such a manner that a hollow space is formed inside the tool case 10. An interior space of the tool case 10 is molded such that at least one piece of the tool 12 can be placed within a mold and is fully surrounded by the tool case 10 in a closed state of the tool case 10. The tool 12 is then firmly held within a tool cavity when the tool case 10 is in a closed state. The here shown screw driller is placed in a tool cavity that essentially takes the shape of the screw driller.

A receiver unit 16, which can be formed as an induction coil, is placed inside the tool case 10. For this, the tool case 10 is designed to form a receiver cavity that holds the receiver unit 16 in a fixed position inside the tool case 10. The receiver unit 16 is located on the at least one connecting side wall of the tool case 10 where the two case halves are connected with each other when the tool case 10 is in an open state. A side wall of the receiver cavity forms a portion of the at least one connecting side wall. As can be seen in fig. 1, in the closed state of the tool case 10 a handle is integrated in a side wall of the tool case 10 opposite to the connecting side wall where the receiver unit 16 is located. So when the tool case 10 is transported manually the receiver inside the tool case 10 is as close as possible to an exterior ground. When the tool case 10 is being deposited, a person carrying the tool case 10 by the handle would naturally place the opposite side to the side with the handle of the tool case 10 on the ground, in other words place the connecting side wall on the ground. This connecting side wall can be also called an outer lower side wall. When the receiver unit 16 is placed in the vicinity of a transmitter unit, which is equally designed as an induction coil, energy can be transferred from one induction coil to the other induction coil by inductive charging. The receiver unit 16 can therefore receive wirelessly energy through the walls of the tool case 10. The receiver unit 16 is further connected to an electric connector 18. For example, the electric connector 18 is designed as an electric wire with a connection jack. The connection jack of the electric connector 18 can be plugged into the screw driller 12 such that the accumulator 14 of the screw driller 12 is being charged when the receiver unit 16 receives energy and transfers at least a part of this energy to the accumulator 14 through the electric connector 18.

According to another embodiment of the invention not shown here it is also possible that the tool case 10 comprises a receiver cavity in a different location inside the tool case 10. More precisely, the receiver cavity can comprise of side wall that can form part of any of one of the outer walls of the tool case 10.

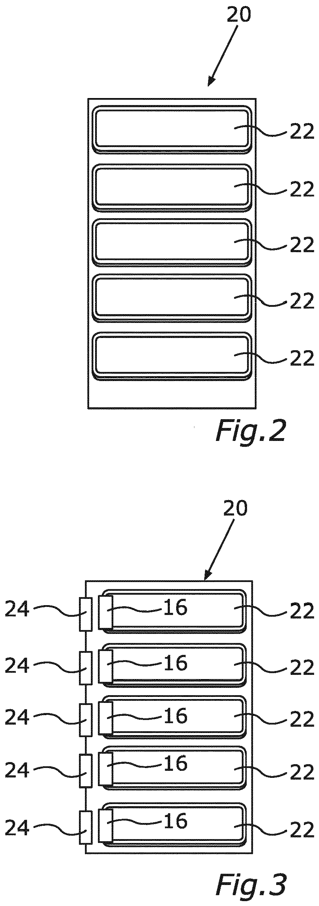

Fig. 2 and fig. 3 respectively show a schematic illustration of a tool cabinet 20 with several tool case compartments 22. For example, a tool cabinet 20 can comprise of five tool case compartments 22. Fig. 2 shows the tool cabinet 20 from a front view. At least one of the compartments 22 can be of the same size and shape as the tool case 10, such that the tool case 10 can be fully placed inside one compartment 22. Each compartment 22 comprises an opening through which the tool case 10 can be inserted. In known manner, the compartments 22 of the tool cabinet 20 can be designed as shelves or drawers.

Fig. 3 shows the tool cabinet 20 from a side view. Opposite to the side of the compartment 22 which comprises the opening is situated another side of the compartment 22 that is confined by a limiting wall. Along this limiting wall is located a transmitter unit 24. Each compartment 22 therefore comprises of at least one transmitter unit 24. The transmitter unit 24 can be designed as an induction coil capable of transmitting energy wirelessly to another induction coil. Each transmitter unit 24 can be connected to a power socket via individual electric connectors or via one common individual electric connector. The tool cabinet 20 can be designed to be mounted inside of a vehicle 26. Each transmitter unit 24 of the tool cabinet 20 can be designed to be connected to an on-board electricity supply system of the vehicle 26.

When the tool case 10 is placed inside a compartment 22 of the tool cabinet 20 the connecting side wall of the tool case 10 faces the limiting wall of the compartment 22 that comprises the transmitter unit 24. In other words the transmitter unit 24 is located such in the compartment 22 that a distance between the transmitter unit 24 and the receiver unit 16 is minimized.

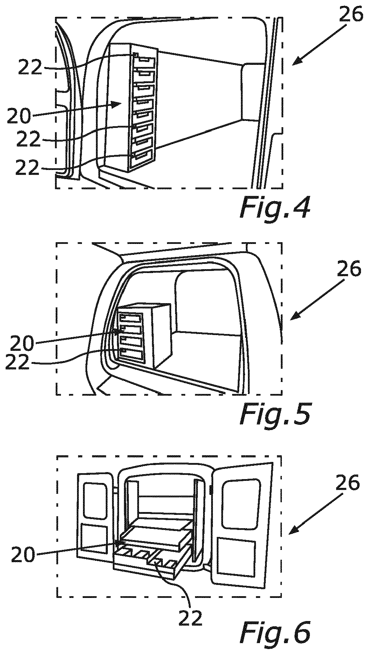

Fig. 4, fig. 5 and fig. 6 show each a schematic illustration of a rear side of a vehicle 26 with a tool cabinet 22 according to an embodiment of the invention. The tool cabinets 22 as shown in figures 4 to 6 can have different sizes and a different number of compartments 22. A tool cabinet 20 can be designed to comprise several compartments 22 with different sizes such that different-shaped tool cases 10 can be placed inside the different compartments 22.

Overall, the examples show how an accumulator of a tool can be charged whilst allowing flexibility to a user of the tool.

### Reference signs

- 10: tool case
- 12: tool
- 14: accumulator
- 16: receiver unit
- 18: electric connector
- 20: tool cabinet
- 22: tool cabinet compartment
- 24: transmitter unit
- 26: vehicle

## Claims

1. Method for charging an accumulator (14) of a tool (12), wherein the tool (12) is placed within a tool case (10), **characterized in that**
- a receiver unit (16) is embedded in the tool case (10); and
- while the tool case (10) is placed in the vicinity of a transmitter unit (24), energy is received by the receiver unit (16) from the transmitter unit (24); and
- the accumulator (14) of the tool (12) is charged by means of an electric connector (18) connecting the tool (12) with the receiver unit (16).

2. Method for charging an accumulator (14) of a tool (12) according to claim 1, wherein the transmitter unit (24) is designed as a first induction coil and the receiver unit (16) is designed as a second induction coil such that the energy is wirelessly transferred from the first induction coil to the second induction coil.

3. Method for charging an accumulator (14) of a tool (12) according to claim 1, wherein the receiver unit (16) is designed as a power plug and the transmitter unit (24) is designed as a matching power socket to the power plug such that the energy is transferred from the power socket to the power plug when the power plug is connected with the power socket.

4. Tool case (10) for housing a tool (12) with an accumulator (14), wherein the tool case (10) comprises at least one tool cavity designed to house the tool (12) in an interior space of the tool case (10), wherein the at least one tool cavity is fully enclosed by at least one outer wall of the tool case (10) in a closed state of the tool case (10),
**characterized in that**
the tool case (10) comprises a receiver cavity in which a receiver unit (16) is embedded, wherein the receiver unit (16) is designed to receive energy from a transmitter unit (24) outside the tool case (10) in a closed state of the tool case (10), and to provide the received energy to an electric connector (18) for connecting the receiver unit (16) with a tool (12) inside the tool case (10) .

5. Tool case (10) for housing a tool (12) with an accumulator (14) according to claim 4, wherein the receiver cavity is located within the tool case (10) such that in the closed state of the tool case (10) at least one side wall of the receiver cavity forms at least a portion of the at least one outer wall of the tool case (10) .

6. Tool case (10) for housing a tool (12) with an accumulator (14) according to claim 4 or 5, wherein the tool case (10) features an outer upper side wall onto which a handle is attached and an outer lower side wall which is opposite to the outer upper side wall, wherein the at least one side wall of the receiver cavity forms at least a portion of the outer lower side wall of the tool case (10).

7. Tool cabinet (20) with several compartments (22) for housing at least one tool case (10),
**characterized in that**
each of the several compartments (22) comprises a transmitter unit (24) designed to transfer energy to a receiver unit (16) when supplied with electricity.

8. Charging system for charging an accumulator (14) of a tool (12), wherein the charging system comprises:
- at least one tool case (10) according to one of the claims 4 to 6; and
- a tool cabinet (20) according to claim 7.

9. Charging system according to claim 8, wherein at least one of the several compartments (22) of the tool cabinet (20) is confined by at least one limiting wall, wherein a respective size of the at least one limiting wall corresponds to a respective size of an outer wall of the at least one tool case (10), wherein the transmitter unit (24) is located on the one of the at least one limiting wall which exhibits the size of the outer wall of the tool case (10) which is at least partially formed by at least one side wall of the receiver cavity comprised by the tool case (10).

10. Vehicle (26) with an on-board supply system for supplying at least one vehicle (26) component with electricity and a tool cabinet (20) according to claim 7, wherein each transmitter unit (24) of the several compartments (22) is connected to the on-board supply system.
